# EUROPEAN PATENT APPLICATION

(11) **EP 2 711 847 A2**
(43) Date of publication of application: **26.03.2014**
(21) Application number: 13181121.8
(22) Date of filing: 21.08.2013
(51) Int. Cl.: G06F 17/21, G06F 17/22

(54) **Page data generation apparatus, recording medium and page data generation method**

(30) Priority: 25.09.2012 JP 2012211505
(71) Applicant: Dainippon Screen Mfg. Co., Ltd., Kyoto 602-8585 (JP)
(72) Inventor: Segawa, Hiroyuki, Kyoto, Kyoto 602-8585 (JP); Ueda, Kohei, Kyoto, Kyoto 602-8585 (JP)
(74) Representative: Goddar, Heinz J.

(57) **Abstract**

A nested relationship acquisition part (21) of a page data generation part (2) acquires a nested relationship among a plurality of page components within page data (32) that uses the page components having the nested relationship. A modified page data generation part (22) generates hierarchical structure display information (331) on the basis of the nested relationship and adds the hierarchical structure display information (331) to the page data (32) so as to easily generate modified page data file (33) that enables the nested relationship among the page components to be displayed as a hierarchical structure. An operator can easily notice a problem with the page data (32) through the displayed hierarchical structure in a short time.

## Description

### Technical Field

The present invention relates to a technique for generating page data.

### Background Art

Printing a different print content on each page (called "variable data printing") such as in the case of printing credit card bills or the like is a conventional practice. In the variable data printing, rasterization (hereinafter, referred to as "RIP processing") is performed on received data to generate raster data while images are being consecutively printed on objects such as printing paper in accordance with the raster data. Recent improvements in the printing speeds of printers have increased the demand for higher RIP processing speed.

The received data, which is page group data indicating many pages, is written in a page description language such as PostScript (registered trademark) or Portable Document Format (PDF). In page group data in PDF format, a page data piece indicating each page (part of the page group data) uses a plurality of page components. These page components are in such a nested relationship that one page component uses another page component and the other page component uses yet another page component. A program (Enfocus Browser of Enfocus BVBA) for displaying page components that are directly used in one page component included in the PDF page group data, as character strings is introduced at <http://www.enfocus.com/en/products/browser>.

Meanwhile, the nested relationship among page components may become complicated irrespective of the intentions of a data producer due to, for example, the way of using desktop publishing (DTP) software in generating page group data in PDF format. For instance, with page group data in which page components are nested to many hierarchy levels, the speed of RIP processing may be reduced or the RIP processing may be terminated due to an error. The aforementioned program (Enfocus Browser of Enfocus BVBA) can display page components that are directly used in one page component, as character strings, but cannot display the entire hierarchical structure of a plurality of page components included in page data.

### Summary of Invention

The present invention is intended for a page data generation apparatus, and it is an object of the present invention to easily generate page data where a hierarchical structure in a plurality of page components can be displayed.

The page data generation apparatus according to the present invention includes a nested relationship acquisition part for acquiring a nested relationship among a plurality of page components that are used in page data, and a modified page data generation part for generating hierarchical structure display information on the basis of the nested relationship and adding the hierarchical structure display information to the page data to generate modified page data that enables the nested relationship among the plurality of page components to be displayed as a hierarchical structure.

According to the present invention, it is possible to easily generate modified page data where a hierarchical structure in a plurality of page components can be displayed.

In a preferred embodiment of the present invention, the hierarchical structure display information includes structure information and association information. The structure information indicates a parent-child relationship among a plurality of elements in the hierarchical structure, and the association information associates each element in the hierarchical structure with a page component corresponding to the element. In this case, more preferably, the modified page data generation part gives each element in the hierarchical structure a name that includes an identifier of the page component corresponding to the element. This enables each element to be easily associated with a page component in the page data by referencing the name of the element even if the identifier of the page component in the modified page data is changed from that in the page data.

In another preferred embodiment of the present invention, the page data that indicates one page is part of page group data that indicates many pages, and the plurality of page components within the page data include a page component reused in page data that is included in the page group data and that indicates another page. This contributes to the generation of appropriate page group data.

Preferably, the page data and the modified page data are in Portable Document Format.

The present invention is also intended for a non-transitory computer-readable recording medium storing a program for causing a computer to generate page data, and a page data generation method used in the page data generation apparatus.

These and other objects, features, aspects and advantages of the present invention will become more apparent from the following detailed description of the present invention when taken in conjunction with the accompanying drawings.

### Brief Description of Drawings

Fig. 1 illustrates a configuration of a computer;
Fig. 2 is a block diagram illustrating a functional configuration implemented by the computer;
Fig. 3 illustrates a page image indicated by page data;
Figs. 4 to 7 are diagrams illustrating a relationship of usage among page components;
Fig. 8 is a flowchart of processing for generating a modified page data file; and
Figs. 9 to 13 illustrate windows displayed on a display.

### Description of Embodiments

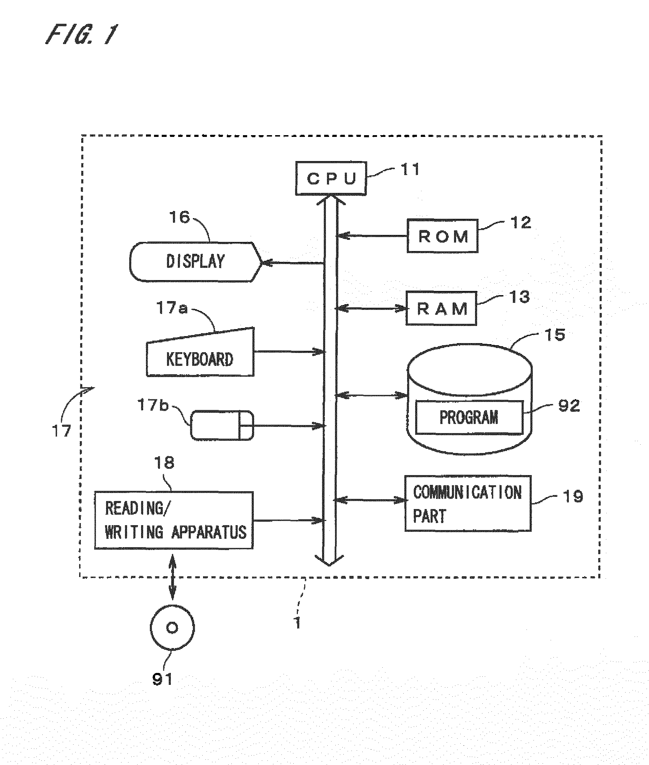

Fig. 1 illustrates a configuration of a computer 1 according to an embodiment of the present invention. As illustrated in Fig. 1, the computer 1 is configured as a typical computer system in which a CPU 11 performing various types of arithmetic processing, a ROM 12 storing a basic program, and a RAM 13 storing various types of information are connected to a bus line. The bus line is further connected via an interface (I/F) or the like as appropriate to a fixed disk 15 storing information, a display 16 displaying various types of information, a keyboard 17a and a mouse 17b (hereinafter, collectively referred to as "input unit 17") that receive input from an operator, a reading/writing apparatus 18 that reads and writes information from and to a computer-readable recording medium 91 such as an optical disk, a magnetic disk, or a magneto-optical disk, and a communication part 19 for communicating with external devices.

The computer 1 causes the reading/writing apparatus 18 to read out a program 92 from the recording medium 91 and store the program 92 in the fixed disk 15 in advance. The program 92 is then copied to the RAM 13, and the CPU 11 executes arithmetic processing in accordance with the program stored in the RAM 13 (i.e., the computer executes the program). This allows the computer 1 to perform processing as a page data generation part described later.

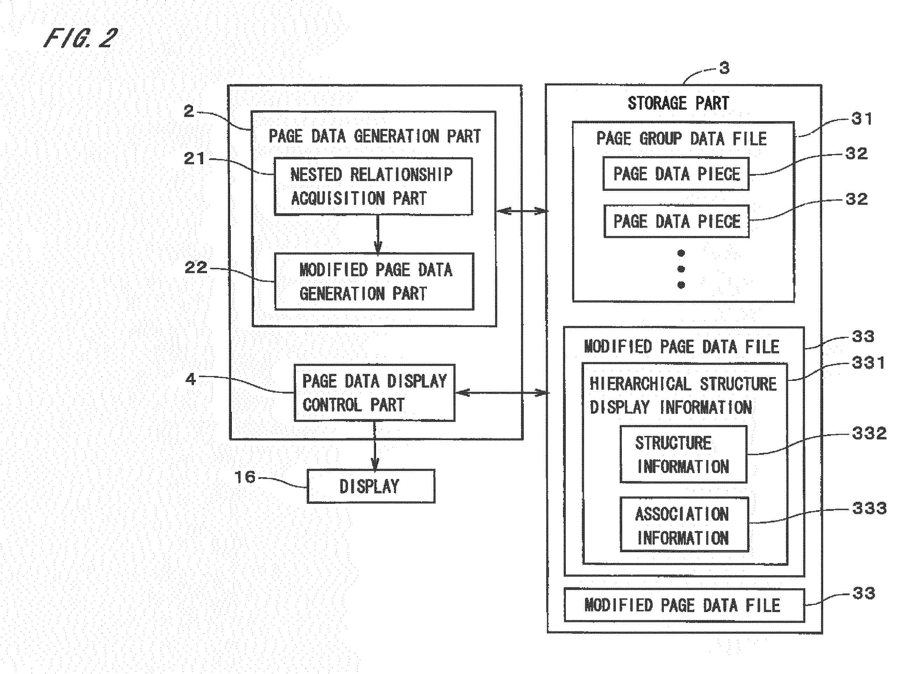

Fig. 2 is a block diagram illustrating a functional configuration implemented by the computer 1. A storage part 3 stores a data file 31 of page group data (hereinafter, referred to as a "page group data file 31") written in a page description language and indicating many pages. The page group data file 31 includes pieces of page data (page data pieces) 32, each indicating one of the pages. Fig. 2 also illustrates a data file 33 of modified page data (hereinafter, referred to as a "modified page data file 33") generated through processing described later. A page data generation part 2 includes a nested relationship acquisition part 21 and a modified page data generation part 22. The computer 1 also serves the function of a page data display control part 4 by executing another program. The details of the page data generation part 2 and the page data display control part 4 will be described later. The function of the page data generation part 2 may be implemented using a dedicated electrical circuit, or a dedicated electrical circuit may be used as part of the page data generation part 2.

Now, the content of the page group data file 31 will be described. The page group data file 31 is generated in advance using predetermined DTP software and stored in the storage part 3. The page group data file 31 includes page data pieces 32, each indicating one of many pages (e.g., several tens of thousands to several hundreds of thousands of pages), and page images of the pages are different in whole or in part from one another. In this embodiment, the page group data file 31 is, for example, a Portable Document Format (PDF) data file.

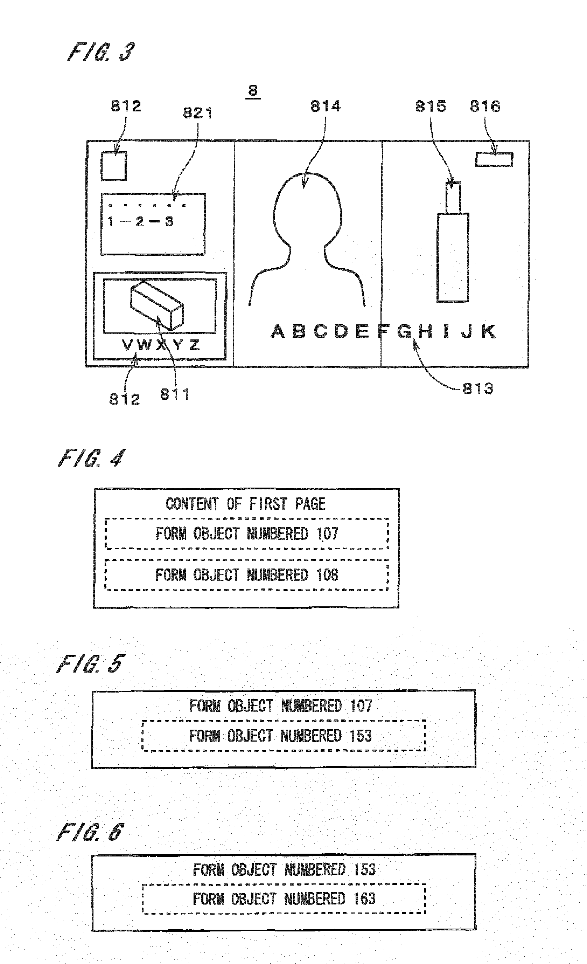

Fig. 3 illustrates a page image 8 indicated by a page data piece 32, which is a part of the page group data file 31. The page image 8 in Fig. 3 is, for example, an image for direct mail. The page data piece 32 uses a plurality of page components. In other words, the page image 8 is represented by a plurality of component images that are images indicated by the respective page components. To be more specific, a component image denoted by 821 in Fig. 3 is indicated by a page component (hereinafter, also referred to as a "variable component") that is used only once in the page group data file 31, i.e., the content of which differs from page to page. The component image 821 indicated by the variable component unique to each page is, for example, a character string indicating an address.

Component images denoted by 811 to 816 in Fig. 3 are indicated by page components (hereinafter, also referred to as "reusable components") that can be used multiple times in the page group data file 31, i.e., that can be used in other page data pieces 32 indicating different pages. The component images 811 to 816 indicated by the reusable components are, for example, photographic images representing specific products, or character strings containing the description of products or the like. In the page group data file 31, all or some of the reusable components are actually reused in page data pieces 32 indicating different pages. In other words, a plurality of page components in a page data piece 32 include page components that are reused in page data pieces 32 indicating different pages in the page group data. Note that two component images denoted by 812 in Fig. 3 are actually represented by one page component.

The relationship of usage among the page components in the above page data piece 32 is written in a page description language. Specifically, the page data piece 32 that describes the page image 8 in Fig. 3 represents the first page in the page group data file 31, and the page data piece 32 describes usage of two reusable page components (reusable components) as the highest-level content of the first page. In Fig. 4, a broken-line rectangle representing "form object numbered 107" and a broken-line rectangle representing "form object numbered 108" are disposed in a solid-line rectangle representing the "content of first page." This indicates that the two reusable components, "form object numbered 107" and "form object numbered 108" are used as the highest-level content of the first page (the same applies to Figs. 5 to 7 described later).

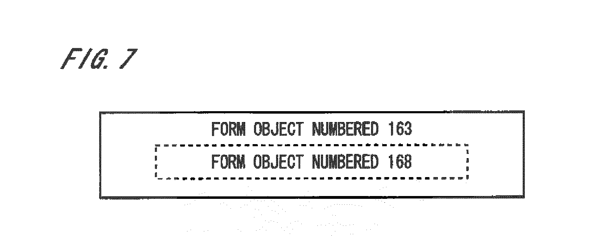

Here, the reusable components are divided into two types, image objects and form objects. The contents of the form objects can contain text, graphics, image objects, and form objects. In other words, the form objects can use image objects and other form objects. In page data pieces 32 in PDF format, image objects and form objects correspond respectively to "Image XObjects" and "Form XObjects." As described previously, the form object numbered 107 and the form object numbered 108 are included in the highest-level content of the first page in the example of Fig. 4. The form object numbered 107 uses a form object numbered 153 as shown in Fig. 5, the form object numbered 153 uses a form object numbered 163 as shown in Fig. 6, and the form object numbered 163 uses an image object numbered 168 as shown in Fig. 7.

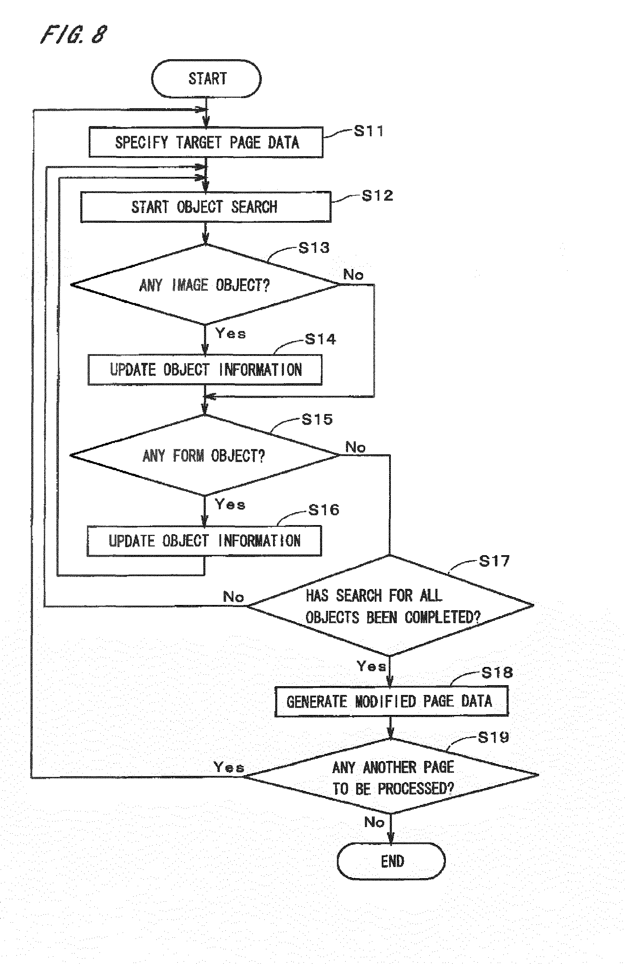

Fig. 8 is a flowchart of processing for generating the modified page data file 33, performed by the page data generation part 2. In the case of generating the modified page data file 33, first, the nested relationship acquisition part 21 in Fig. 2 specifies a page data piece 32 indicating a predetermined page in the page group data file 31 as a page data piece 32 to be processed (hereinafter, referred to as "target page data piece 32") (step S11). A page data piece 32 that is to be processed by the page data generation part 2 is, for example, a page data piece 32 indicating the first page among a plurality of pages that include the same reusable component. It is assumed here that the page data piece 32 indicating the page image 8 in Fig. 3 (the page data piece 32 indicating the first page) is specified as the target page data piece 32.

When the target page data piece 32 has been specified, a search of the target page data piece 32 for form objects and image objects is started (step S12). Specifically, the highest-level content of the first page is searched first. Then, the form object numbered 107 is initially found as shown in Fig. 4 (steps S13 and S15), and information indicating that the highest-level content of the first page includes (uses) the form object numbered 107 is generated and stored as object information (step S16). Note here that step S16 in Fig. 8 shows the content of processing performed for the second time and subsequent times, and the object information is generated when step S16 is performed for the first time.

After the object information has been generated, the content of the form object numbered 107 is searched (step S12) and the form object numbered 153 is found as shown in Fig. 5 (steps S13 and S15). Then, information indicating that the content of the form object numbered 107 includes the form object numbered 153 is added to the object information to update the object information (step S16). Then, the content of the form object numbered 153 is searched (step S12), the form object numbered 163 is found as shown in Fig. 6, and the object information is updated (steps S13, S15, and S16). Thereafter, the content of the form object numbered 163 is searched (step S12), and the image object numbered 168 is found as shown in Fig. 7 (step S13). Then, information indicating that the content of the form object numbered 163 includes the image object numbered 168 is added to the object information to update the object information (step S14).

The content of the form object numbered 163 does not include any more image and form objects other than the image object numbered 168 (step S15). Thus, the content of the form object numbered 153 in which the form object numbered 163 has been found (i.e., the content of the object at the next higher level from that of the form object numbered 163) is again searched (steps S17 and S12). Similarly, the content of the form object numbered 153 does not include any more image and form objects other than the form object numbered 163 (see Fig. 6) (steps S 13 and S15). Thus, the content of the form object numbered 107 in which the form object numbered 153 has been found is searched (steps S17 and S12). The same processing is performed on the form object numbered 107 (see Fig. 5) (steps S13 and S15) and the highest-level content of the first page in which the form object numbered 107 has been found is searched (steps S17 and S12).

In the highest-level content of the first page, the form object numbered 108 is found as shown in Fig. 4 (steps S13 and S15), and information indicating that the highest-level content of the first page includes the form object numbered 108 is added to the object information to update the object information (step S16). After the object information has been generated, the content of the form object numbered 108 is searched (step S12).

In this way, all image and form objects that are used in the target page data piece 32 are searched for to update the object information (steps S12 to S17). The object information thus indicates the nested relationship (nesting relationship) among all image and form objects.

Upon completion of the search of the first page for all image and form objects (step S 17), the modified page data generation part 22 generates a modified page data file 33 (step S18). To be more specific, the form object numbered 107 included in the highest-level content of the first page is specified from the object information, an element (or layer) having a name that includes the number of the form object is generated, and information that associates the generated element with the form object numbered 107 is set in the form object numbered 107. In the present example, the element corresponding to each form object is given a name consisting of letters "FM" followed by the number of the form object, and the element corresponding to each image object is given a name consisting of letters "IM" followed by the number of the image object. The element corresponding to the form object numbered 107 is thus given a name "FM107." Alternatively, each element may be given a name that includes an identifier other than a number (e.g., a letter or a symbol) if the identifier is allocated to each image object and to each form object.

Next, the form object numbered 153 included in the content of the form object numbered 107 is specified from the object information, an element having a name "FM153" (hereinafter, simply called an "element FM153") is set at a lower level than the element FM107 (at the next lower level from that of the element FM107), and information that associates the element FM 153 with the form object numbered 153 is set in the form object numbered 153. Similarly, an element FM163 is set at a lower level than the element FM153, and information that associates the element FM163 with the form object numbered 163 is set in the form object numbered 163. Furthermore, an element IM168 is set at a lower level than the element FM163, and information that associates the element IM168 with the image object numbered 168 is set in the image object numbered 168. The same processing as described above is also performed on the form object numbered 108 included in the highest-level content and on all objects used in this form object.

The above-described processing produces information indicating a plurality of elements that correspond respectively to all form and image objects used in the target page data piece 32 and the parent-child relationship among these elements. In other words, structure information 332 indicating a hierarchical structure (i.e., a tree structure) consisting of the elements is generated. Also, information that associates each of these form and image objects with one of the elements is set for the object. Then, the target page data piece 32 to which the structure information 332 (and other information as necessary) has been added is output to and stored in the storage part 3 as the modified page data file 33. In Fig. 2, the information that associates every form object and every image object with one of the elements is illustrated as one block as association information 333, and a cluster of the structure information 332 and the association information 333 is illustrated as hierarchical structure display information 331.

When adding the hierarchical structure display information 331 to a page data piece 32 to generate modified page data that is a newly generated page data piece, the page data generation part 2 of this embodiment changes the numbers of the reusable components (image objects and form objects) in the modified page data from those in the original page data piece 32. However, in the modified page data file 33, the element having a name that includes the number of each reusable component in the original page data piece 32 is associated with the reusable component in the modified page data file 33, which has the same content as that of the reusable component in the original page data piece 32, by referencing the association information 333. Depending on the design of the page data generation part 2, the modified page data file 33 may be generated such that each reusable component in the modified page data has the same number as that in the original page data piece 32.

When the presence of another page data piece 32 to be processed has been detected in the page data generation part 2 (step S 19), the nested relationship acquisition part 21 specifies another target page data piece 32 and generates a modified page data file 33 from the target page data piece 32 through similar processing as described above (steps S11 to S18). The modified page data file 33 is generated for each page data piece 32 to be processed, which completes the processing performed by the page data generation part 2 (step S 19).

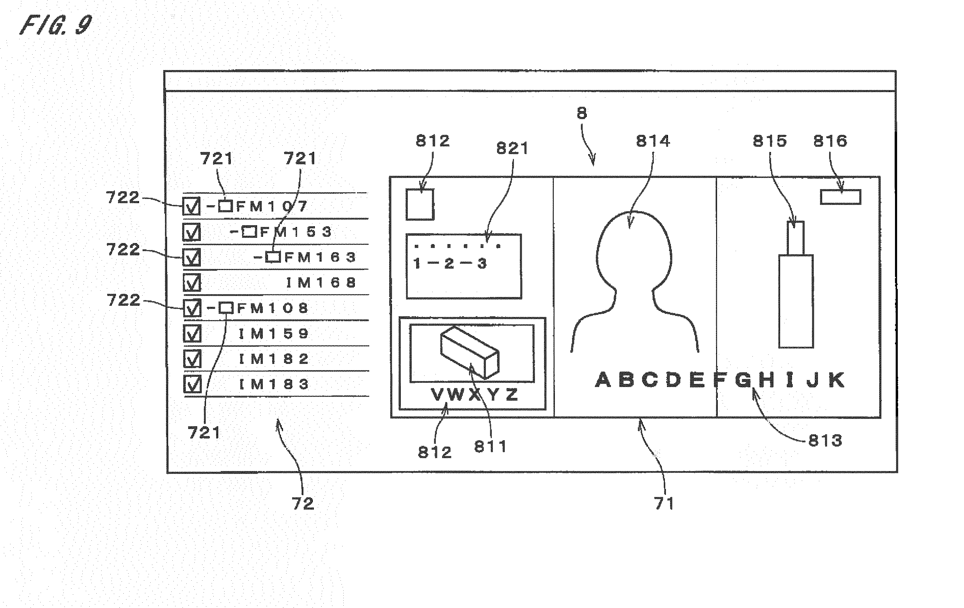

Next is a description of the page data display control part 4 in Fig. 2 displaying the content of the modified page data file 33. Fig. 9 illustrates a window displayed on the display 16 by the page data display control part 4 in accordance with the modified page data file 33. As illustrated in Fig. 9, the same page image 8 as in Fig. 3 is displayed in a page image display area 71 in the window. The hierarchical structure indicated by the structure information 332 is also displayed in a hierarchical structure display area 72.

To be more specific, a rectangular figure 721 provided immediately before the name of an element (layer) in the hierarchical structure display area 72 indicates that the element includes at least one lower-level element. The horizontal position of each rectangular figure 721 indicates the level of the element. That is, the higher the level of the element, the closer the rectangular figure 721 is to the left side. An element having no rectangular figure 721 immediately before its name is at the next lower level from that of the immediately upper element having the rectangular figure 721. In the example of Fig. 9, the element FM107 and the element FM108 are both at the highest level and independent of each other. The element FM153 is at the next lower level from that of the element FM107, the element FM163 is at the next lower level from that of the element FM153, and the element IM168 is at the next lower level from that of the element FM163. Elements IM159, IM182, and IM183 are at the next lower level from that of the element FM108.

Each element has a checkbox 722 on the left side of its name. When a checkmark is placed in the checkbox 722 of each element (the element is ON), the component image of the page component corresponding to that element is displayed in the page image display area 71. When no checkmark is placed in the checkbox 722, i.e., the checkbox 722 is unchecked (the element is OFF), the component image of the page component corresponding to that element is hidden in the page image display area 71. Whether or not to place a checkmark in the checkbox 722 (ON/OFF) can be selected through the input unit 17.

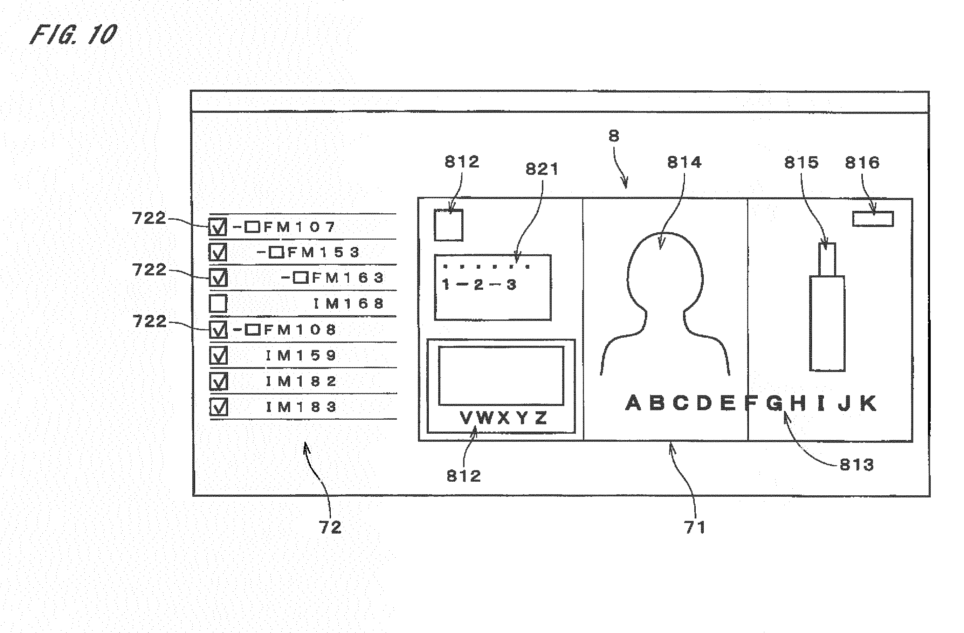

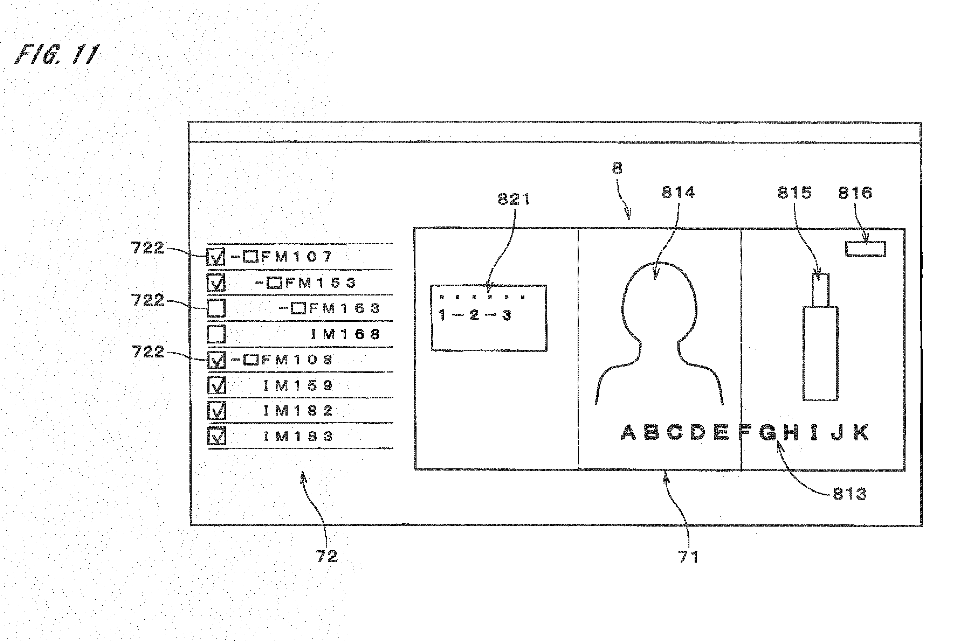

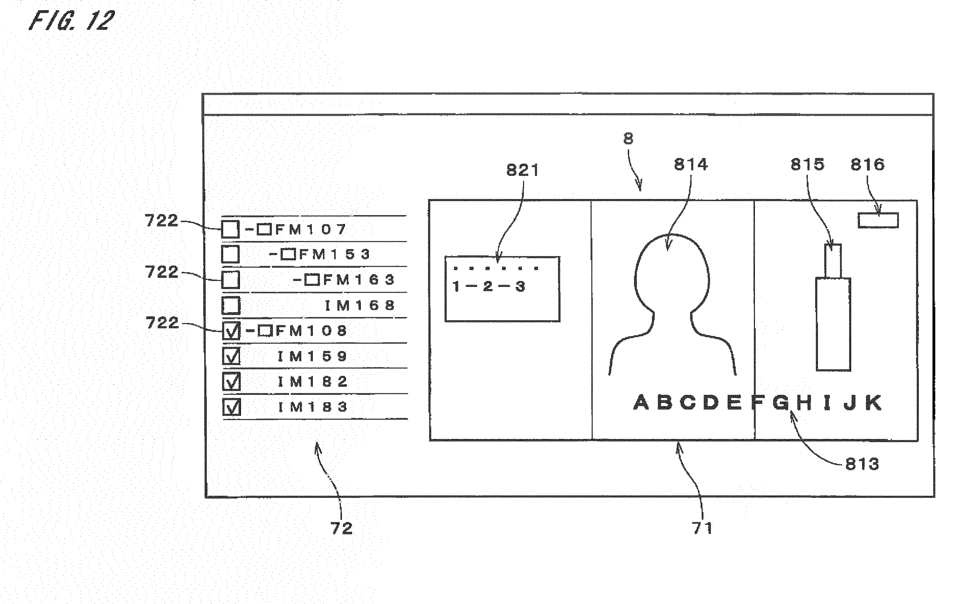

For example, when the checkbox 722 of the element IM168 is unchecked, the component image 811 indicated by the image object corresponding to the element IM168 (the image object numbered 168 in the original page data piece 32) is hidden in the page image display area 71 as illustrated in Figs. 9 and 10. When the checkbox 722 of the element FM163 is unchecked, the component image 812 indicated by the form object corresponding to the element FM163 (the form object numbered 163 in the original page data piece 32) is hidden as illustrated in Figs. 10 and 11. Note that the form objects corresponding to the elements FM153 and FM107 indicate none of the component images and therefore nothing changes in the page image 8 as illustrated in Figs. 11 and 12 if the checkboxes 722 of the elements FM153 and FM107 are unchecked.

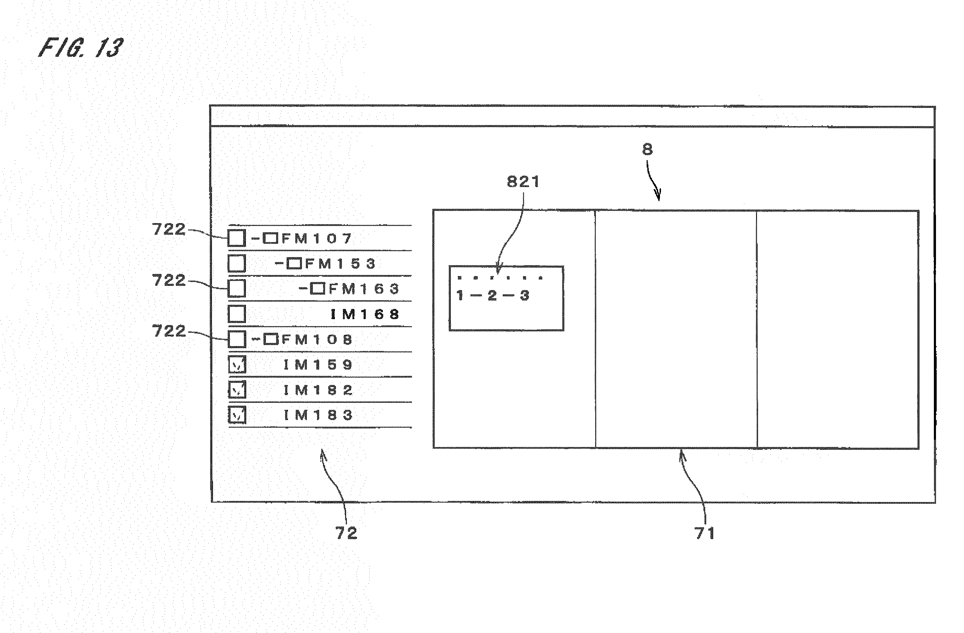

When the checkbox 722 of the element FM108 at a higher level than that of the elements IM159, IM182, and IM183 is unchecked while checkmarks are placed in the checkboxes 722 of these elements IM159, IM182, and IM183, the checkmarks in the checkboxes 722 of the elements IM159, IM182, and IM183 are grayed out as illustrated in Fig. 13. In addition, the component image 816 indicated by the form object corresponding to the element FM108 is hidden as illustrated in Figs. 12 and 13. Furthermore, the component image 815 indicated by the image object corresponding to the element IM159, the component image 814 indicated by the image object corresponding to the element IM182, and the component image 813 indicated by the image object corresponding to the element IM183 are also hidden. Accordingly, the component images indicated by all image objects and all form objects (reusable components) included in the modified page data file 33 are hidden and only the component image 821 indicated by the variable component is displayed in the page image display area 71 illustrated in Fig. 13.

When the modified page data file 33 is in PDF format, the page data display control part 4 is, for example, a function implemented through execution of software such as Acrobat (registered trademark) of Adobe Systems Inc., and the hierarchical structure display area 72 is an area invoked by the function of displaying layers. In this case, each element is equivalent to a layer, and the processing for generating the modified page data performed by the page data generation part 2 is taken as processing for mapping out the hierarchical structure of reusable components into a layer structure. Alternatively, the program 92 may be designed to implement the page data display control part 4, in addition to the page data generation part 2.

Here, the nested relationship among page components may be complicated irrespective of the intentions of a data producer due to, for example, the way of using DTP software in generating page group data. For example, in the case where a given reusable component at the highest level uses a plurality of other reusable components nested to multiple levels (i.e., the hierarchical structure is deep), raster data of component image that is generated from the reusable component through RIP processing on one page may not be able to be cached in memory to be used in other pages even if the reusable component is reused in many other pages. In this case, a long time is required to perform RIP processing on the page group data (i.e., the RIP processing speed is reduced). Also, the RIP processing may be terminated due to an error. Furthermore, in the case where there are many reusable components at the highest level, it may be difficult for a printing apparatus to efficiently use data of all component images of these reusable components.

Meanwhile, the page data generation part 2 in Fig. 2 acquires the nested relationship among a plurality of page components in a page data piece 32 that uses the page components having a nested relationship. Then, the hierarchical structure display information 331 is generated on the basis of the nested relationship and added to the page data piece 32. This facilitates the generation of modified page data that enables the nested relationship among the page components to be displayed as a hierarchical structure.

Thus, for example, in the case of analyzing page group data that has required a long time for RIP processing, the page data generation part 2 generates a modified page data file 33 from page data that indicates a page of interest (e.g., the first page among a plurality of pages that include the same reusable component) in the page group data, and the page data display control part 4 displays a hierarchical structure indicating the nested relationship among the page components on the display 16. This enables the operator to instantaneously confirm the number (depth) of hierarchical levels of the reusable components, the number of independent reusable components at the highest level, and the like from the displayed hierarchical structure and to easily notice a problem with the page data in a short time.

The ON/Off state of each checkbox 722 in the hierarchical structure display area 72 enables the operator to visually recognize which component image is indicated by each page component in a complicated structure, e.g., the page component at a deep level. This contributes to reducing the aforementioned problems with the page group data and establishing the method of generating page group data that is free from the aforementioned problems. Alternatively, the modified page data file 33 may be generated prior to the RIP processing performed on the page group data so that the operator can ascertain the hierarchical structure of a plurality of page components in the page data 32 (i.e., page date piece).

The modified page data generation part 22 gives each element in the hierarchical structure a name that includes the number of the page component corresponding to the element in the page data 32. Thus, even if the numbers of the reusable components (image objects and form objects) in the modified page data are changed from those in the page data 32, each component image in the page image 8, which is either displayed or hidden depending on the ON/OFF state of the checkbox 722 of the corresponding element, can be easily associated with the corresponding reusable component in the original page data 32 by referencing the name of the element in the hierarchical structure display area 72.

While the above has been a description of embodiments of the present invention, the present invention is not intended to be limited to the above-described embodiments, and can be modified in various ways.

In the above-described embodiment, the hierarchical structure display information 331 includes the structure information 332 indicating the parent-child relationship among a plurality of elements in the hierarchical structure, and the association information 333 that associates each element in the hierarchical structure with the page component corresponding to that element. However, the hierarchical structure display information for displaying the nested relationship among a plurality of page components as a hierarchical structure may be made in other forms.

The function of the page data generation part 2 serving as a page data generation apparatus may be implemented using an apparatus independent of the apparatus that includes the page data display control part 4.

The configuration of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### Reference Signs List

- 1: Computer
- 2: Page data generation part
- 11: CPU
- 13: RAM
- 21: Nested relationship acquisition part
- 22: Modified page data generation part
- 31: Page group data file
- 32: Page data (piece)
- 33: Modified page data file
- 92: Program
- 331: Hierarchical structure display information
- 332: Structure information
- 333: Association information
- S11 to S19: Step

## Claims

1. A page data generation apparatus (2) comprising:
a nested relationship acquisition part (21) for acquiring a nested relationship among a plurality of page components that are used in page data (32); and
a modified page data generation part (22) for generating hierarchical structure display information (331) on the basis of said nested relationship and adding said hierarchical structure display information to said page data to generate modified page data (33) that enables said nested relationship among said plurality of page components to be displayed as a hierarchical structure.

2. The page data generation apparatus according to claim 1, wherein
said hierarchical structure display information includes structure information (332) and association information (333),
said structure information indicating a parent-child relationship among a plurality of elements in said hierarchical structure, and
said association information associating each element in said hierarchical structure with a page component corresponding to said each element.

3. The page data generation apparatus according to claim 2, wherein
said modified page data generation part gives said each element in said hierarchical structure a name that includes an identifier of the page component corresponding to said each element.

4. The page data generation apparatus according to any one of claims 1 to 3, wherein
said page data that indicates one page is part of page group data (31) that indicates many pages, and
said plurality of page components within said page data include a page component reused in page data that is included in said page group data and that indicates another page.

5. The page data generation apparatus according to any one of claims 1 to 4, wherein
said page data and said modified page data are in Portable Document Format.

6. A non-transitory computer-readable recording medium (91) storing a program (92) for causing a computer (1) to generate page data, said program causing the computer to execute:
a) acquiring a nested relationship among a plurality of page components that are used in page data (32) (S 12 to S17); and
b) generating hierarchical structure display information (331) on the basis of said nested relationship and adding said hierarchical structure display information to said page data to generate modified page data (33) that enables said nested relationship among said plurality of page components to be displayed as a hierarchical structure (S18).

7. The recording medium according to claim 6, wherein
said hierarchical structure display information includes structure information (332) and association information (333),
said structure information indicating a parent-child relationship among a plurality of elements in said hierarchical structure, and
said association information associating each element in said hierarchical structure with a page component corresponding to said each element.

8. The recording medium according to claim 7, wherein
in said operation b), said each element in said hierarchical structure is given a name that includes an identifier of a page component corresponding to said each element.

9. The recording medium according to any one of claims 6 to 8, wherein
said page data that indicates one page is part of page group data (31) that indicates many pages, and
said plurality of page components within said page data includes a page component reused in page data that is included in said page group data and that indicates another page data.

10. The recording medium according to any one of claims 6 to 9, wherein
said page data and said modified page data are in Portable Document Format.

11. A page data generation method used in a page data generation apparatus comprising:
a) acquiring a nested relationship among a plurality of page components that are used in page data (32) (S12 to S17); and
b) generating hierarchical structure display information (331) on the basis of said nested relationship and adding said hierarchical structure display information to said page data to generate modified page data (33) that enables said nested relationship among said plurality of page components to be displayed as a hierarchical structure (S 18).

12. The page data generation method according to claim 11, wherein
said hierarchical structure display information includes structure information (332) and association information (333),
said structure information indicating a parent-child relationship among a plurality of elements in said hierarchical structure, and
said association information associating each element in said hierarchical structure with a page component corresponding to said each element.

13. The page data generation method according to claim 12, wherein
in said operation b), said each element in said hierarchical structure is given a name that includes an identifier of a page component corresponding to said each element.

14. The page data generation method according to any one of claims 11 to 13, wherein
said page data that indicates one page is part of page group data (31) that indicates many pages, and
said plurality of page components within said page data includes a page component reused in page data that is included in said page group data and that indicates another page data.

15. The page data generation method according to any one of claims 11 to 14, wherein
said page data and said modified page data are in Portable Document Format.
